# EUROPEAN PATENT SPECIFICATION

(11) **EP 3 164 602 B1**
(45) Date of publication and mention of the grant of the patent: **07.11.2018**
(21) Application number: 15733697.5
(22) Date of filing: 29.06.2015
(51) Int. Cl.: F04B 53/10, F04B 53/22, F16K 17/04

(54) **OVERFLOW VALVE FOR A FUEL FEED SYSTEM AND METHOD FOR PRODUCTION OF SUCH A VALVE**
ÜBERSTRÖMVENTIL FÜR EIN BRENNSTOFFZUFUHRSYSTEM UND VERFAHREN ZUR HERSTELLUNG EINES DERARTIGEN VENTILS
SOUPAPE DE DÉCHARGE DESTINÉE À UN SYSTÈME D'ALIMENTATION EN CARBURANT ET PROCÉDÉ DE PRODUCTION D'UNE TELLE SOUPAPE

(30) Priority: 03.07.2014 IT MI20141214
(43) Date of publication of application: 10.05.2017
(73) Proprietor: Robert Bosch GmbH, 70442 Stuttgart (DE)
(72) Inventor: LOIACONO, Benedetto, I-70026 Modugno (IT); MEDEA, Luciano, I-74121 Taranto (TA) (IT); DE MATTHAEIS, Elio, I-70026 Modugno (BA) (IT)
(86) International application number: PCT/EP2015/064735
(87) International publication number: WO 2016/001166

(56) References cited:
- EP-A2- 0 358 899
- EP-A2- 1 291 563
- DE-A1-102009 042 889
- DE-A1-102012 203 722
- DE-A1-102012 219 072

## Description

The present invention relates to an overflow valve for a fuel feed system and to a method for production of such a valve.

In particular, the system for feeding fuel from a tank to an internal combustion engine comprising a high-pressure pump having a pump body and a seat formed in the pump body; an overflow valve comprises a valve body housed in the seat formed in the pump body; an inlet opening; a discharge opening; a lubrication opening and a closing member movable along an axis of the valve body so as to adjust the flow of the fuel from the inlet opening to the discharge opening.

The valve body is formed by means of turning and/or boring and/or grinding of a solid rough-metal cylinder and is screwed into the pump
The prior art DE 102012219072 shows a known overflow valve.

A drawback of the prior art consists in the fact that the valve thus produced is costly and involves long machining times. In fact, during machining, 60% of the material of the solid cylinder is lost, thus resulting in wasted material. Moreover, the abovementioned mechanical chip-removal operations are costly.

The object of the present invention is to provide an overflow valve for a fuel feed system which limits the drawbacks of the prior art.

According to the present invention an overflow valve is provided for a fuel feed system comprising a high-pressure pump having a pump body; the overflow valve comprising a valve body formed by a metal sheet folded so as to assume at least partly the form of a cylindrical wall and configured to be housed inside a seat formed in the pump body; an inlet opening; a discharge opening; a lubrication opening and a sliding member movable along an axis of the valve body so as to adjust the flow of the fuel from the inlet opening to the discharge opening; in which the valve body has a slit along a generatrix of the cylindrical wall configured to connect the inlet opening to the lubrication opening, preferably the slit extends along the entire length of the valve body.

As a result of the present invention, the production process is simple and fast and does not involve machining waste. For this reason, the overflow valve has relatively low production costs.

Moreover, as a result of the present invention, the valve body is deformable since it is formed by means of a metal sheet and consequently the closing member adheres better to the valve body and the leaks between closing member and valve body are reduced.

According to a preferred embodiment of the present invention, the overflow valve comprises a spring element coupled together with the closing member so as to push the closing member along the axis towards the inlet opening; and a connector which is fixed to the valve body by means of interference and configured to retain the spring element.

As a result of the present invention, locking of the spring element is obtained in a simple and effective manner which ensures operation of the closing member.

According to another preferred embodiment of the present invention, the discharge opening is formed on the cylindrical wall of the valve body and the closing member comprises a side wall engaged with and slidable along the cylindrical wall of the valve body so as to adjust the fuel flow along the discharge opening.

As a result of the present invention, it is ensured that the pressure at the inlet of the overflow valve does not exceed a given value, above which in fact the inlet of the overflow communicates with the outlet.

As a result of the present invention, the slit prevents the accumulation of fuel inside the valve body, allows perfect operation of the valve and also ensures lubrication of a chamber in the high-pressure pump to which the lubrication opening is connected.

According to a further preferred embodiment of the present invention the valve body comprises an annular wall which is integral with the cylindrical wall and projects with respect thereto and the closing member makes bearing contact with the annular wall in a closed position.

As a result of the present invention, the stroke of the closing member is stopped directly by the valve body and consequently it is possible to assemble entirely the overflow valve before inserting it into the pump body.

Another object of the present invention is to provide a fuel feed system which limits the drawbacks of the prior art.

Accordingly the present invention provides a system for feeding the fuel from a tank to an internal combustion engine comprising a high-pressure pump having a pump body and a seat formed in the pump body; an inlet duct; a lubrication duct; a discharge duct and an overflow valve according to any one of the preceding claims; wherein the valve body is housed inside the seat of the pump body.

According to a preferred embodiment of the present invention, the valve body is sealingly fixed inside the seat of the pump body by means of interference.

According to a further preferred embodiment of the present invention the closing member makes bearing contact with the pump body in a closed position. According to a further preferred embodiment of the present invention the inlet duct, the discharge duct and the lubrication duct are formed in the pump body and are connected respectively to the inlet opening, the lubrication opening and the discharge opening.

According to a further preferred embodiment of the present invention, the seat comprises another projecting annular wall which defines the seat; the valve body making bearing contact with the projecting annular wall of the pump body.

Another object of the present invention is to provide an overflow valve for a fuel feed system which limits the drawbacks of the prior art.

Accordingly the present invention provides a method for production of an overflow valve for a fuel feed system comprising a high-pressure pump having a pump body; the overflow valve comprising a metal sheet; an inlet opening; a discharge opening; a lubrication opening and a closing member; the method comprising the steps of: folding the metal sheet so that it assumes at least partly the form of a cylindrical wall and thus forms a valve body of the overflow valve configured to be housed inside a seat formed in the pump body; the movable closing member being movable along an axis of the valve body so as to adjust the flow of the fuel from the inlet opening to the discharge opening; in which the step of folding the metal sheet for forming the cylindrical wall comprises the substep of folding the metal sheet so as to leave a slit along a generatrix of the cylindrical wall and connect the inlet opening with the lubrication opening via the slit, preferably the slit extends along the entire length of the valve body.

As a result of the present invention the valve is made using a simple, low-cost and fast production method.

According to a preferred embodiment, the method comprises the steps of inserting a spring element inside the valve body and coupling it together with the closing member so as to push the closing member along the axis towards the inlet opening; and inserting a connector inside the valve body, coupling it together with the spring element so as to retain the spring element inside the valve body and fixing the connector to the valve body by means of interference.

According to a further preferred embodiment, the closing member comprises a side wall and the method comprises the steps of providing a discharge opening along the cylindrical wall of the valve body and engaging and sliding the side wall of the closing member along the cylindrical wall of the valve body so as to adjust the fuel flow along the discharge opening.

According to a further preferred embodiment, the method comprises the step of providing an annular wall which is integral with the cylindrical wall and projects with respect thereto; the closing member making bearing contact with the annular wall in a closed position.

Another object of the present invention is to provide a method for production of a system for feeding the fuel from a tank to an internal-combustion engine which limits the drawbacks of the prior art.

Accordingly the present invention provides a method for production of a system for feeding the fuel from a tank to an internal-combustion engine comprising a high-pressure pump having a pump body; an inlet duct; a lubrication duct; a discharge duct; comprising the steps of: forming a seat in the pump body; providing an overflow valve formed according to any one of Claims 10 to 13; and housing the valve body inside the seat of the pump body.

According to a preferred embodiment of the present invention, the method comprises the step of assembling the valve body inside the pump body by means of interference.

According to a further preferred embodiment of the present invention, the method comprises the steps of forming a seat in pump body; providing an overflow valve formed according to any one of Claims 10 to 13; and housing the valve body inside the seat of the pump body; the closing member making bearing contact with the pump body in a closed position.

According to a further preferred embodiment of the present invention, the method comprises the steps of forming the inlet duct, the discharge duct and the lubrication duct in the pump body and connecting them to the inlet opening, the lubrication opening and the discharge opening, respectively.

According to a further preferred embodiment of the present invention, the step of forming the seat in the pump body comprises the substep of forming another projecting annular wall in the pump body, the valve body making bearing contact with the projecting annular wall of the pump body.

The present invention will now be described with reference to the accompanying drawings which illustrate non-limiting examples of embodiment thereof, in which:
- Figure 1 is a cross-sectional view, with parts removed for greater clarity, of a fuel feed system provided in accordance with the present invention;
- Figure 2 is a perspective view of a detail of the feed system according to Figure 1; and
- Figure 3 is a cross-sectional view, with parts removed for greater clarity, of an alternative embodiment of the invention according to Figure 1.

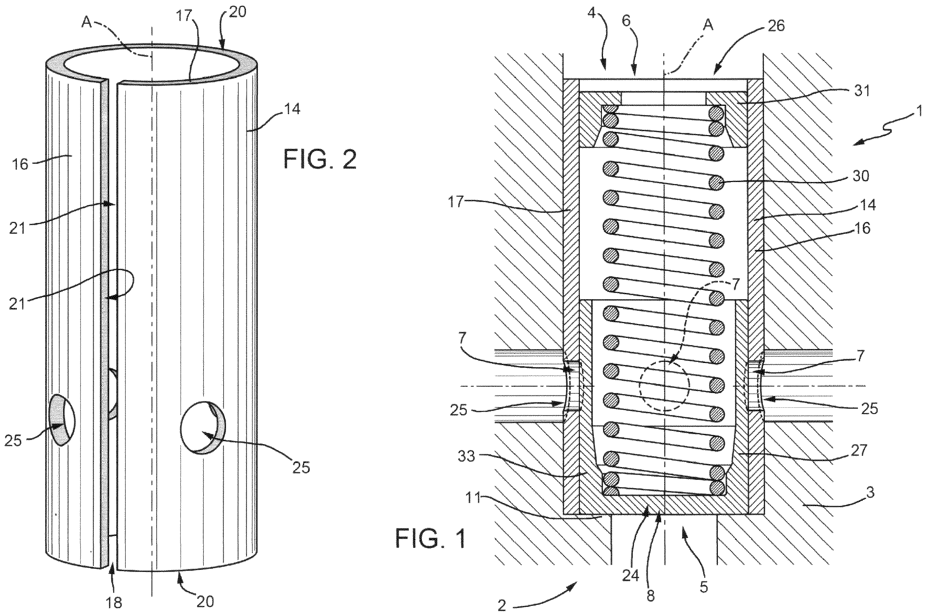

With reference to Figure 1, 1 denotes in its entirety a system for feeding fuel, preferably diesel fuel, from a tank (not shown) to an internal combustion engine (not shown). The system 1 comprises a high-pressure pump 2 (only a few parts of which are visible) having a pump body 3 and a seat 4 formed in the pump body 3; a inlet duct 5; a lubrication duct 6; discharge ducts 7 and an overflow valve 8.
The inlet duct 5, the lubrication duct 6 and the discharge ducts 7 are formed in the pump body 3. Moreover, the pump body 3 comprises an annular wall 11 projecting at one end of the seat 4.

With reference to Figures 1 and 2, the overflow valve 8 comprises a valve body 14 formed by a metal sheet 16 folded so as to assume at least partly the form of a cylindrical wall 17. In greater detail, the valve body 14 is a cylinder which has a slit 18 along a generatrix of said cylinder. The slit 18 extends along the entire length of the cylinder. In fact, the unfolded metal sheet 16 comprises two ends 20 parallel to each other and two ends 21 parallel to each other. The metal sheet 16 is folded into a cylindrical form and consequently the ends 20 assume a circular form while the ends 21 maintain a linear form. During the folding step, the two ends 21 are not arranged so as to meet and consequently a cylinder is obtained with the slit 18 along a generatrix of the said cylinder, extending along the whole length of the cylinder.

The valve body 14, thus defined, is housed inside the seat of the pump body 3 and is sealingly fixed by means of interference to the pump body 3. One end of the valve body 14 makes bearing contact with the annular wall 11 of the pump body 3.

The overflow valve 8 comprises an inlet opening 24; discharge openings 25; a lubrication opening 26 and a closing member 27 movable along an axis A of the valve body 14 so as to adjust the flow of the fuel from the inlet opening 24 to the discharge opening 25. The inlet opening 24 is defined by an open base of the cylindrical wall 17, while the lubrication opening 26 is defined by the other base of the cylindrical wall 17. The inlet opening 24 is connected to the lubrication opening 26 via the slit 18 of the cylindrical wall 17. In this way, the fuel flows from the inlet opening 24 to the lubrication opening 26 irrespective of the position of the closing member 27.

The discharge opening 21 is formed in the valve body 14 by forming apertures in the cylindrical wall 17.

Moreover, the closing member 27 is housed inside the valve body 5 and is movable along the axis A between a closed position and an open position.

The overflow valve 8 comprises a spring element 30 arranged inside the valve body 14 and coupled together with the closing member 27. The spring element 30 pushes the sliding member 27 along the axis A towards the inlet opening 24. Moreover, the overflow valve 8 comprises a connector 31 arranged inside the valve body 14 adjacent to the outlet opening 26 and fixed to the valve body 14 by means of interference. The connector 31 has the function of retaining the spring element 30 inside the valve body 14.

In the closed position the closing member 27 makes bearing contact with the pump body 3 and is kept in the closed position by the spring element 30. In greater detail the closing member 27 makes bearing contact with the annular wall 11 of the pump body 4. In other words, the annular wall 11 defines an end-of-stroke position of the closing member 27.

The closing member 27 comprises a side wall 33 engaged with and slidable along the cylindrical wall 17 of the valve body 14 so as to adjust the fuel flow along the discharge opening 25. In greater detail, depending on the position of the closing member 27 inside the valve body 14, the side wall 33 of the closing member 27 closes off or leaves free the discharge openings 25.

The high-pressure pump 2 comprises movable pumping parts and a chamber (not shown in the figures). The lubrication duct 6 connects the lubrication opening 26 of the overflow valve 4 to the chamber. In this way the chamber is fed with fuel for lubricating the chamber and the movable pumping parts housed inside it. The discharge duct 7 connects the discharge opening 25 to the tank in order to recover the excess fuel. Moreover the inlet duct 5 is connected to the inlet opening 24.

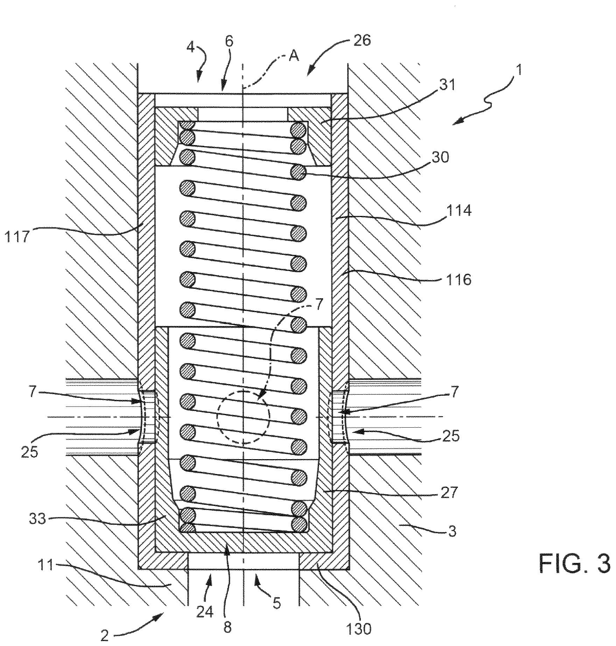

In an alternative embodiment of the present invention shown in Figure 3, the valve body 14 is replaced by the valve body 114 which is defined by a metal sheet 116 folded so as to form a cylindrical wall 117. The metal sheet 116 comprises an annular wall 130 integral with the cylindrical wall 117 and projecting with respect thereto. In greater detail the projecting annular wall 130 extends radially with respect to the generatrix of the cylinder and towards the inside of the cylinder. The closing member 27 makes bearing contact with the annular wall 130 in the closed position. The projecting annular wall 130 makes bearing contact with the pump body 3. In this way the overflow valve 8 may be preassembled before being inserted into the pump body 3.

In both embodiments, since the valve body 14 and 114 is formed with a metal sheet 16 and 116 it is deformable and therefore the closing member 27 adheres better to the valve body 14 and 114 and the leakages between closing member 27 and valve body 14 and 14 are reduced.

It is furthermore evident that the present invention also covers embodiments not described in the detailed description and equivalent embodiments which fall within the scope of protection of the accompanying claims.

## Claims

1. An overflow valve (8) for a fuel feed system (1) comprising a high-pressure pump (2) having a pump body (3); the overflow valve (8) comprising a valve body (14; 114) formed by a metal sheet (16; 116) folded so as to assume at least partly the form of a cylindrical wall (17) and configured to be housed inside a seat (4) formed in the pump body (3); an inlet opening (24); a discharge opening (25); a lubrication opening (26) and a sliding member (27) movable along an axis (A) of the valve body (14; 114) so as to adjust the flow of the fuel from the inlet opening (24) to the discharge opening (25); wherein the valve body (14; 114) has a slit (18) along a generatrix of the cylindrical wall (17) configured to connect the inlet opening (24) to the lubrication opening (26), the slit preferably extending along the entire length of the valve body (14; 114).

2. Overflow valve according to Claim 1, wherein the overflow valve (8) comprises a spring element (3) coupled together with the closing member (27) so as to push the closing member (27) along the axis (A) towards the inlet opening (24); and a connector (31) which is fixed to the valve body (14; 114) by means of interference and is configured to retain the spring element (30).

3. Overflow valve according to Claim 1 or 2, wherein the discharge opening (25) is formed on the cylindrical wall (17) of the valve body (14; 114) and wherein the closing member (27) comprises a side wall (33) engaged with and slidable along the cylindrical wall (17) of the valve body (14; 114) so as to adjust the fuel flow along the discharge opening (25).

4. Overflow valve according to any one of the preceding claims, wherein the valve body (105) comprises an annular wall (120) which is integral with the cylindrical wall and projects with respect thereto and wherein the closing member (27) makes bearing contact with the annular wall (120) in a closed position.

5. A system for feeding the fuel from a tank to an internal combustion engine comprising a high-pressure pump (2) having a pump body (3) and a seat (4) formed in the pump body (3); an inlet duct (5); a lubrication duct (6); a discharge duct (6) and an overflow valve (8) according to any one of the preceding claims; wherein the valve body (14; 114) is housed inside the seat (4) of the pump body (3).

6. The system according to Claim 5, wherein the valve body (5; 105) is sealingly fixed inside the seat (7) of the pump body (5) by means of interference.

7. A system for feeding the fuel from a tank to an internal combustion engine comprising a high-pressure pump (2) having a pump body (3) and a seat (4) formed in the pump body (3); an inlet duct (5); a lubrication duct (6); a discharge duct (6) and an overflow valve (8) according to any one of Claims 1 to 4, wherein the valve body (14) is the housed inside the seat (4) of the pump body (3) and wherein the closing member (27) makes bearing contact with the pump body (3) in a closed position.

8. The system according to any one of Claims 5 to 7, wherein the inlet duct (8), the discharge duct (7) and the lubrication duct (6) are formed in the pump body (3) and are connected to the inlet opening (24), the lubrication opening (26) and the discharge opening (25), respectively.

9. The system according to any one of Claims 5 to 8, wherein the seat (4) comprises another projecting annular wall (11) which defines the seat (4); the valve body (14) making bearing contact with the projecting annular wall (11) of the pump body (3).

10. A method for production of an overflow valve (8) for a fuel feed system (1) comprising a high-pressure pump (2) having a pump body (3); the overflow valve (8) comprising a metal sheet (14; 114); an inlet opening (24); a discharge opening (25); a lubrication opening (26) and a closing member (27); the method comprising the steps of: folding the metal sheet (16) so that it assumes at least partly the form of a cylindrical wall (17) and thus forms a valve body (14; 114) of the overflow valve (8) configured to be housed inside a seat (4) formed in the pump body (3); the movable closing member (27) being movable along an axis (A) of the valve body (14; 114) so as to adjust the flow of the fuel from the inlet opening (24) to the discharge opening (25); wherein the step of folding the metal sheet (16) for forming the cylindrical wall (17) comprises the substep of folding the metal sheet (16) so as to obtain a slit (18) along a generatrix of the cylindrical wall (17) and connect the inlet opening (24) to the lubrication opening (26) via the slit (18), the slit (18) preferably extending along the entire length of the valve body (14; 114).

11. The method according to Claim 10, comprising the steps of inserting a spring element (30) inside the valve body (14; 114) and coupling it together with the closing member (27) so as to push the closing member (27) along the axis (A) towards the inlet opening (24); and inserting a connector (31) inside the valve body (14; 114), coupling it together with the spring element (30) so as to retain the spring element (30) inside the valve body (14; 114) and fixing the connector (31) to the valve body (14; 114) by means of interference.

12. The method according to Claim 10 or 11, wherein the closing member (30) comprises a side wall (33) and the method comprises the steps of providing the discharge opening (25) along the cylindrical wall (17) of the valve body (14; 114) and engaging and sliding the side wall (33) of the closing member (30) along the cylindrical wall (17) of the valve body (14; 114) so as to adjust the fuel flow along the discharge opening (25).

13. The method according to any one of Claims 10 to 12, comprising the step of providing an annular wall (130) which is integral with the cylindrical wall (17) and projects with respect thereto; the closing member (27) making bearing contact with the annular wall (130) in a closed position.

14. Method for production of a system for feeding the fuel from a tank to an internal combustion engine comprising a high-pressure pump (2) having a pump body (3); an inlet duct (5); a lubrication duct (6); a discharge duct (7); comprising the steps of: forming a seat (4) in the pump body (3), providing an overflow valve (8) according to any one of Claims 10 to 13, and housing the valve body (14; 114) inside the seat (4) of the pump body (5; 105).

15. The method according to Claim 14, comprising the step of sealingly fixing the valve body (14; 114) inside the pump body (3) by means of interference.

16. Method for production of a system for feeding the fuel from a tank to an internal combustion engine comprising a high-pressure pump (2) having a pump body (3); an inlet duct (5); a lubrication duct (6); a discharge duct (7); comprising the steps of: forming a seat (4) in pump body (3); providing an overflow valve (8) according to any one of Claims 10 to 13; and housing the valve body (14; 114) inside the seat (4) of the pump body (3); and wherein the closing member (27) makes bearing contact with the pump body (3) in a closed position.

17. The method according to any one of Claims 14 to 16, comprising the steps of forming the inlet duct (5), the discharge duct (7) and the lubrication duct (6) in the pump body (3) and connecting them to the inlet opening (24), the lubrication opening (26) and the discharge opening (25), respectively.

18. The method according to any one of Claims 14 to 16, wherein the step of forming the seat (4) in the pump body (3) comprises the substep of forming another projecting annular wall (11) in the pump body (3); the valve body (14; 114) making bearing contact with the projecting annular wall (11) of the pump body (3).

## Patentansprüche

1. Überströmventil (8) für ein Kraftstoffzufuhrsystem (1), welches eine Hochdruckpumpe (2), die einen Pumpenkörper (3) aufweist, umfasst, wobei das Überströmventil (8) einen Ventilkörper (14; 114), der durch ein Metallblech (16; 116) ausgebildet ist, das derart gefalzt ist, dass zumindest teilweise die Form einer zylindrischen Wand (17) erreicht wird, und das ausgelegt ist, um in einem Sitz (4), der in dem Pumpenkörper (3) ausgebildet ist, aufgenommen zu werden, eine Einlassöffnung (24), eine Auslassöffnung (25), eine Schmiermittelöffnung (26) und ein Gleitstück (27) umfasst, das entlang einer Achse (A) des Ventilkörpers (14; 114) derart bewegt werden kann, dass die Strömung des Kraftstoffs von der Einlassöffnung (24) zur Auslassöffnung (25) eingestellt wird, wobei der Ventilkörper (14; 114) einen Schlitz (18) entlang einer Mantellinie der zylindrischen Wand (17) aufweist, die ausgelegt ist, um die Einlassöffnung (24) mit der Schmiermittelöffnung (26) zu verbinden, wobei der Schlitz sich vorzugsweise entlang der gesamten Länge des Ventilkörpers (14; 114) erstreckt.

2. Überströmventil nach Anspruch 1, wobei das Überströmventil (8) ein Federelement (3), das mit dem Verschlusselement (27) zusammengekoppelt ist, um so das Verschlusselement (27) entlang der Achse (A) zur Einlassöffnung (24) hin zu schieben, und ein Verbindungsstück (31) umfasst, das mittels Passung an den Ventilkörper (14; 114) angebracht ist und ausgelegt ist, um das Federelement (30) zu halten.

3. Überströmventil nach Anspruch 1 oder 2, wobei die Auslassöffnung (25) in der zylindrischen Wand (17) des Ventilkörpers (14; 114) ausgebildet ist und wobei das Verschlusselement (27) eine Seitenwand (33) umfasst, die mit der zylindrischen Wand (17) des Ventilkörpers (14; 114) in Eingriff steht und an dieser entlang gleitbar ist, um so die Kraftstoffströmung entlang der Auslassöffnung (25) einzustellen.

4. Überströmventil nach einem der vorhergehenden Ansprüche, wobei der Ventilkörper (105) eine ringförmige Wand (120) umfasst, die fest mit der zylindrischen Wand verbunden ist und in Bezug auf diese vorragt, und wobei das Verschlusselement (27) mit der ringförmigen Wand (120) in einer geschlossenen Position in anliegendem Kontakt steht.

5. System zum Zuführen des Kraftstoffs aus einem Tank zu einem Verbrennungsmotor, welches eine Hochdruckpumpe (2), die einen Pumpenkörper (3) und einen Sitz (4), der im Pumpenkörper (3) ausgebildet ist, aufweist, einen Einlasskanal (5), einen Schmiermittelkanal (6), einen Auslasskanal (6) und ein Überströmventil (8) gemäß einem der vorhergehenden Ansprüche umfasst; wobei der Ventilkörper (14; 114) innerhalb des Sitzes (4) des Pumpenkörpers (3) untergebracht ist.

6. System nach Anspruch 5, wobei der Ventilkörper (5; 105) mittels Passung abdichtend innerhalb des Sitzes (7) des Pumpenkörpers (5) befestigt ist.

7. System zum Zuführen des Kraftstoffs aus einem Tank zu einem Verbrennungsmotor, welches eine Hochdruckpumpe (2), die einen Pumpenkörper (3) und einen Sitz (4), der im Pumpenkörper (3) ausgebildet ist, aufweist, einen Einlasskanal (5), einen Schmiermittelkanal (6), einen Auslasskanal (6) und ein Überströmventil (8) gemäß einem der Ansprüche 1 bis 4 umfasst, wobei der Ventilkörper (14) innerhalb des Sitzes (4) des Pumpenkörpers (3) untergebracht ist und wobei das Verschlusselement (27) mit dem Pumpenkörper (3) in einer geschlossenen Position in anliegendem Kontakt steht.

8. System nach einem der Ansprüche 5 bis 7, wobei der Einlasskanal (8), der Auslasskanal (7) und der Schmiermittelkanal (6) im Pumpenkörper (3) ausgebildet sind und jeweils mit der Einlassöffnung (24), der Schmiermittelöffnung (26) und der Auslassöffnung (25) verbunden sind.

9. System nach einem der Ansprüche 5 bis 8, wobei der Sitz (4) eine weitere vorragende ringförmige Wand (11) umfasst, die den Sitz (4) definiert, wobei der Ventilkörper (14) mit der vorragenden ringförmigen Wand (11) des Pumpenkörpers (3) in anliegendem Kontakt steht.

10. Verfahren zur Herstellung eines Überströmventils (8) für ein Kraftstoffzufuhrsystem (1), das eine Hochdruckpumpe (2) umfasst, die einen Pumpenkörper (3) aufweist, wobei das Überströmventil (8) ein Metallblech (14; 114), eine Einlassöffnung (24), eine Auslassöffnung (25), eine Schmiermittelöffnung (26) und ein Verschlusselement (27) umfasst, wobei das Verfahren die folgenden Schritte umfasst: Falzen des Metallblechs (16), so dass es zumindest teilweise die Form einer zylindrischen Wand (17) annimmt und somit einen Ventilkörper (14; 114) des Überströmventils (8) ausbildet, der ausgelegt ist, um innerhalb eines Sitzes (4), der in dem Pumpenkörper (3) ausgebildet ist, untergebracht zu sein, wobei das bewegbare Verschlusselement (27) entlang einer Achse (A) des Ventilkörpers (14; 114) bewegt werden kann, um so die Strömung des Kraftstoffs aus der Einlassöffnung (24) zur Auslassöffnung (25) einzustellen; wobei der Schritt des Falzens des Metallblechs (16) zum Ausbilden der zylindrischen Wand (17) den Teilschritt des Falzens des Metallblechs (16) umfasst, um so einen Schlitz (18) entlang einer Mantellinie der zylindrischen Wand (17) zu erhalten und die Einlassöffnung (24) durch den Schlitz (18) mit der Schmiermittelöffnung (26) zu verbinden, wobei der Schlitz (18) sich vorzugsweise entlang der gesamten Länge des Ventilkörpers (14; 114) erstreckt.

11. Verfahren nach Anspruch 10, umfassend die Schritte des Einführens eines Federelements (30) innerhalb des Ventilkörpers (14; 114) und Zusammenkoppelns des Federelements mit dem Verschlusselement (27), um so das Verschlusselement (27) entlang der Achse (A) zu der Einlassöffnung (24) hin zu schieben, und Einführens eines Verbindungsstücks (31) innerhalb des Ventilkörpers (14; 114), Zusammenkoppelns von diesem mit dem Federelement (30), um so das Federelement (30) in dem Ventilkörper (14; 114) zu halten, und Befestigens des Verbindungsstücks (31) an dem Ventilkörper (14; 114) mittels Passung.

12. Verfahren nach Anspruch 10 oder 11, wobei das Verschlusselement (30) eine Seitenwand (33) umfasst und das Verfahren die Schritte des Bereitstellens der Auslassöffnung (25) entlang der zylindrischen Wand (17) des Ventilkörpers (14; 114) und Ineingriffnehmens und Gleitens der Seitenwand (33) des Verschlusselements (30) entlang der zylindrischen Wand (17) des Ventilkörpers (14; 114), um so die Kraftstoffströmung in der Auslassöffnung (25) einzustellen, umfasst.

13. Verfahren nach einem der Ansprüche 10 bis 12, umfassend die Schritte des Bereitstellens einer ringförmigen Wand (130), die fest mit der zylindrischen Wand (17) verbunden ist und in Bezug auf diese vorragt, wobei das Verschlusselement (27) mit der ringförmigen Wand (130) in einer geschlossenen Position in anliegendem Kontakt steht.

14. Verfahren zur Herstellung eines Systems zum Zuführen des Kraftstoffs aus einem Tank zu einem Verbrennungsmotor, welches eine Hochdruckpumpe (2), die einen Pumpenkörper (3) aufweist, einen Einlasskanal (5), einen Schmiermittelkanal (6), einen Auslasskanal (7) umfasst, die folgenden Schritte umfassend: Ausbilden eines Sitzes (4) in dem Pumpenkörper (3), Bereitstellen eines Überströmventils (8) gemäß einem der Ansprüche 10 bis 13 und Unterbringen des Ventilkörpers (14; 114) innerhalb des Sitzes (4) des Pumpenkörpers (5; 105).

15. Verfahren nach Anspruch 14, umfassend den Schritt des abdichtenden Befestigens des Ventilkörpers (14; 114) innerhalb des Pumpenkörpers (3) mittels Passung.

16. Verfahren zur Herstellung eines Systems zum Zuführen des Kraftstoffs aus einem Tank zu einem Verbrennungsmotor, welches eine Hochdruckpumpe (2), die einen Pumpenkörper (3) aufweist, einen Einlasskanal (5), einen Schmiermittelkanal (6), einen Auslasskanal (7) umfasst, umfassend die Schritte des: Bereitstellens eines Sitzes (4) im Pumpenkörper (3), Bereitstellens eines Überströmventils (8) gemäß einem der Ansprüche 10 bis 13 und Unterbringens des Ventilkörpers (14; 114) innerhalb des Sitzes (4) des Pumpenkörpers (3), und wobei das Verschlusselement (27) mit dem Pumpenkörper (3) in einer geschlossenen Position in anliegendem Kontakt steht.

17. Verfahren nach einem der Ansprüche 14 bis 16, umfassend die Schritte des Ausbildens des Einlasskanals (5), des Auslasskanals (7) und des Schmiermittelkanals (6) in dem Pumpenkörper (3) und Verbindens dieser jeweils mit der Einlassöffnung (24), der Schmiermittelöffnung (26) und der Auslassöffnung (25).

18. Verfahren nach einem der Ansprüche 14 bis 16, wobei der Schritt des Ausbildens des Sitzes (4) im Pumpenkörper (3) den Teilschritt des Ausbildens einer weiteren vorragenden ringförmigen Wand (11) in dem Pumpenkörper (3) umfasst, wobei der Ventilkörper (14; 114) mit der vorragenden ringförmigen Wand (11) des Pumpenkörpers (3) in anliegendem Kontakt steht.

## Revendications

1. Soupape de décharge (8) destinée à un système d'alimentation en carburant (1) comprenant les éléments suivants: une pompe haute pression (2) comprenant un corps de pompe (3); la soupape de décharge (8) comprenant un corps de soupape (14; 114) constitué par une feuille métallique (16; 116) pliée de manière à prendre au moins partiellement la forme d'une paroi cylindrique (17) et configurée pour être logée à l'intérieur d'un siège (4) formé dans le corps de la pompe (3); une ouverture d'entrée (24); une ouverture de décharge (25); une ouverture de lubrification (26) et un élément coulissant (27) mobile le long d'un axe (A) du corps de la soupape (14; 114) de manière à régler l'écoulement du carburant, de l'ouverture d'entrée (24) à l'ouverture de décharge (25); le corps de soupape (14; 114) présentant une fente (18) le long d'une génératrice de la paroi cylindrique (17) configurée pour relier l'ouverture d'entrée (24) à l'ouverture de lubrification (26), la fente s'étendant de préférence sur toute la longueur du corps de la soupape (14; 114).

2. Soupape de décharge selon la revendication 1, dans laquelle la soupape de décharge (8) comprend un élément à ressort (3) couplé avec l'élément de fermeture (27) de manière à pousser l'élément de fermeture (27) le long de l'axe (A) vers l'ouverture d'entrée (24); et un connecteur (31) qui est fixé au corps de soupape (14; 114) par interférence et est configuré pour retenir l'élément à ressort (30).

3. Soupape de décharge selon la revendication 1 ou 2, dans laquelle l'ouverture de décharge (25) est formée sur la paroi cylindrique (17) du corps de soupape (14; 114) et dans laquelle l'élément de fermeture (27) comprend une paroi latérale (33) en prise avec la paroi cylindrique (17) du corps de soupape (14; 114) et pouvant coulisser le long de celle-ci de manière à régler l'écoulement du carburant le long de l'ouverture de décharge (25).

4. Soupape de décharge selon l'une quelconque des revendications précédentes, dans laquelle le corps de soupape (105) comprend une paroi annulaire (120) qui fait partie intégrante de la paroi cylindrique et fait saillie par rapport à celle-ci, et dans laquelle l'élément de fermeture (27) entre en contact avec la paroi annulaire (120) dans une position fermée.

5. Système d'alimentation en carburant d'un réservoir à un moteur à combustion interne comprenant une pompe à haute pression (2) ayant un corps de pompe (3) et un siège (4) formé dans le corps de pompe (3); un conduit d'entrée (5); un conduit de lubrification (6); un conduit de décharge (6) et une soupape de décharge (8) selon l'une quelconque des revendications précédentes; le corps de soupape (14; 114) étant logé à l'intérieur du siège (4) du corps de pompe (3).

6. Système selon la revendication 5, dans lequel le corps de soupape (5; 105) est fixé de manière étanche à l'intérieur du siège (7) du corps de pompe (5) au moyen d'interférences.

7. Système d'alimentation en carburant d'un réservoir à un moteur à combustion interne comprenant une pompe haute pression (2) ayant un corps de pompe (3) et un siège (4) formé dans le corps de pompe (3); un conduit d'entrée (5); un conduit de lubrification (6); un conduit de décharge (6) et une soupape de décharge (8) selon l'une quelconque des revendications 1 à 4, le corps de soupape (14) étant le siège (4) du corps de pompe (3) et l'élément de fermeture (27) faisant contact de palier avec le corps de pompe (3) dans une position fermée.

8. Système selon l'une quelconque des revendications 5 à 7, dans lequel le conduit d'entrée (8), le conduit de décharge (7) et le conduit de lubrification (6) sont formés dans le corps de pompe (3) et sont reliés respectivement à l'ouverture d'entrée (24), à l'ouverture de lubrification (26) et à l'ouverture de décharge (25).

9. Système selon l'une quelconque des revendications 5 à 8, dans lequel le siège (4) comprend une autre paroi annulaire saillante (11) qui définit le siège (4); le corps de soupape (14) étant en contact de palier avec la paroi annulaire saillante (11) du corps de pompe (3).

10. Procédé de production d'une soupape de décharge (8) pour un système d'alimentation en carburant (1) comprenant une pompe haute pression (2) ayant un corps de pompe (3); la soupape de décharge (8) comprenant une tôle métallique (14; 114); une ouverture d'entrée (24); une ouverture de décharge (25); une ouverture de lubrification (26) et un élément de fermeture (27); le procédé comprenant les étapes consistant à: plier la tôle métallique (16) de sorte qu'elle prenne au moins partiellement la forme d'une paroi cylindrique (17) et forme ainsi un corps de soupape (14; 114) de la soupape de décharge (8) configuré pour être logé à l'intérieur d'un siège (4) formé dans le corps de pompe (3); l'élément de fermeture mobile (27) étant mobile le long d'un axe (A) du corps de soupape (14; 114) afin de régler l'écoulement du carburant de l'ouverture d'entrée (24) à l'ouverture de décharge (25); l'étape de pliage de la tôle métallique (16) pour former la paroi cylindrique (17) comprenant l'étape de pliage de la tôle métallique (16) de manière à obtenir une fente (18) le long d'une génératrice de la paroi cylindrique (17) et connecter l'ouverture d'entrée (24) à l'ouverture de lubrification (26) par l'intermédiaire de la fente (18), la fente (18) s'étendant de préférence sur toute la longueur du corps de soupape (14; 114).

11. Procédé selon la revendication 10, comprenant les étapes consistant à insérer un élément à ressort (30) à l'intérieur du corps de soupape (14; 114) et à le coupler avec l'élément de fermeture (27) de manière à pousser l'élément de fermeture (27) le long de l'axe (A) vers l'ouverture d'entrée (24); et à insérer un connecteur (31) à l'intérieur du corps de soupape (14; 114), à le coupler avec l'élément à ressort (30) de manière à retenir l'élément à ressort (30) à l'intérieur du corps de soupape (14; 114) et à fixer le connecteur (31) au corps de soupape (14; 114) au moyen d'interférences.

12. Procédé selon la revendication 10 ou 11, dans lequel l'élément de fermeture (30) comprend une paroi latérale (33) et le procédé comprend les étapes consistant à prévoir l'ouverture de décharge (25) le long de la paroi cylindrique (17) du corps de soupape (14; 114) et à engager et faire coulisser la paroi latérale (33) de l'élément de fermeture (30) le long de la paroi cylindrique (17) du corps de soupape (14; 114) de manière à régler l'écoulement du carburant le long de l'ouverture de décharge (25).

13. Procédé selon l'une quelconque des revendications 10 à 12, comprenant l'étape consistant à prévoir une paroi annulaire (130) qui fait partie intégrante de la paroi cylindrique (17) et fait saillie par rapport à celle-ci; l'élément de fermeture (27) établissant un contact de palier avec la paroi annulaire (130) dans une position fermée.

14. Procédé de fabrication d'un système d'alimentation en carburant d'un réservoir à un moteur à combustion interne comprenant une pompe à haute pression (2) ayant un corps de pompe (3); un conduit d'entrée (5); un conduit de lubrification (6); un conduit de décharge (7); comprenant les étapes consistant à: former un siège (4) dans le corps de pompe (3), fournir une soupape de décharge (8) selon l'une quelconque des revendications 10 à 13, et loger le corps de soupape (14; 114) à l'intérieur du siège (4) du corps de pompe (5; 105).

15. Procédé selon la revendication 14, comprenant l'étape de fixation étanche du corps de soupape (14; 114) à l'intérieur du corps de pompe (3) au moyen d'interférences.

16. Procédé de fabrication d'un système d'alimentation en carburant d'un réservoir à un moteur à combustion interne comprenant une pompe haute pression (2) ayant un corps de pompe (3); un orifice d'admission (5); un conduit de lubrification (6); un conduit de décharge (7); comprenant les étapes consistant à: former un siège (4) dans le corps de pompe (3); prévoir une soupape de décharge (8) selon l'une quelconque des revendications 10 à 13; et loger le corps de soupape (14; 114) à l'intérieur du siège (4) du corps de pompe (3); et dans lequel l'élément de fermeture (27) entre en contact de palier avec le corps de pompe (3) dans une position fermée.

17. Procédé selon l'une quelconque des revendications 14 à 16, comprenant les étapes consistant à former le conduit d'entrée (5), le conduit de décharge (7) et le conduit de lubrification (6) dans le corps de pompe (3) et à les connecter à l'ouverture d'entrée (24), l'ouverture de lubrification (26) et l'ouverture de décharge (25), respectivement.

18. Procédé selon l'une quelconque des revendications 14 à 16, dans lequel l'étape de formation du siège (4) dans le corps de pompe (3) comprend l'étape de formation d'une autre paroi annulaire saillante (11) dans le corps de pompe (3); le corps de soupape (14; 114) étant en contact de palier avec la paroi annulaire saillante (11) du corps de pompe (3).
